# EUROPEAN PATENT SPECIFICATION

(11) **EP 3 376 458 B1**
(45) Date of publication and mention of the grant of the patent: **15.07.2020**
(21) Application number: 17161177.5
(22) Date of filing: 15.03.2017
(51) Int. Cl.: G06Q 20/22, H04W 4/80, G06Q 20/32, H04L 29/06, H04B 5/00, H04W 12/08

(54) **NFC DEVICE AND INITIALIZATION METHOD**
NFC-VORRICHTUNG UND INITIALISIERUNGSVERFAHREN
DISPOSITIF NFC ET PROCÉDÉ D'INITIALISATION

(43) Date of publication of application: 19.09.2018
(73) Proprietor: NXP B.V., 5656 AG Eindhoven (NL)
(72) Inventor: HIRANNIAH, Anil, 5656 AG Eindhoven (NL); PALLE, Priyank, 5656 AG Eindhoven (NL); DHIVARE, Sachin, 5656 AG Eindhoven (NL); VIMAL, Shashank, 5656 AG Eindhoven (NL); SURESH, Suhas, 5656 AG Eindhoven (NL)
(74) Representative: Krott, Michel

(56) References cited:
- EP-A1- 2 861 035
- US-A1- 2016 104 160

## Description

### FIELD

The present disclosure relates to an NFC device. Furthermore, the present disclosure relates to a corresponding method of initializing an NFC device, and to a corresponding computer program.

### BACKGROUND

The use of near field communication (NFC) enables the wireless transmission of data over relatively short distances. NFC-enabled mobile devices, such as smart phones and tablets, often contain an application processor for carrying out general application-related computing tasks and an NFC controller which is operatively coupled to the application processor. The NFC controller is configured to control the near field communication between the NFC device and an external device, for example an NFC reader in a Point-of-Sale (POS) terminal. Furthermore, an NFC-enabled mobile device typically comprises one or more execution environments for performing specific application-related tasks. For example, these execution environments may be implemented as secure elements. A secure element may for example be an embedded chip, more specifically a tamper-resistant integrated circuit with installed or preinstalled smart-card-grade applications, for instance payment applications, which have a prescribed functionality and a prescribed level of security. Furthermore, a secure element may implement security functions, such as cryptographic functions and authentication functions. An example of a secure element is a so-called universal integrated circuit card (UICC). An NFC-enabled mobile device may contain a plurality of execution environments. In that case, it may be difficult to manage the communication between the various components of the mobile device.

US 2016/104160 A1 describes systems and methods for managing concurrent secure elements on a mobile device to coordinate with an application or "app" running on the mobile device and an appropriate communications protocol for conducting transactions using the mobile device, which include: informing, by the processor, the conducting transactions using the mobile device, which include: informing, by the processor, the reader device of a preferred app and a communication protocol usable by the preferred app; receiving, by the processor, information about which apps and communication protocols are supported by a reader for processing a transaction; locating, by the processor, a secure element supporting an app and a communication protocol supported by the reader; channeling the communication protocol for the specific configuration of the app and the supporting secure element; activating the secure element that supports the app; and processing, with the activated secure element, using the supported app and communication channel, the transaction with the reader.

WO 2016/172948 A1 describes a routing information configuration method and apparatus. The method comprises: generating a first routing table, where the first routing table comprises first routing information corresponding to a first application identifier (AID), a non-contact application corresponding to the first AID simultaneously exists in at least two near-field communication execution environments (NFCEEs), the first routing information comprises the first AID and a near-field communication execution environment identifier (NFCEE ID) of a first NFCEE, and the first NFCEE is one of the at least two NFCEEs; and configuring the first routing table to a near-field communication controller (NFCC).

### SUMMARY

In accordance with a first aspect of the present disclosure, a near field communication, NFC, device is provided as defined in claim 1.

In one or more embodiments, the execution environments are implemented as secure elements.

In one or more embodiments, the secure elements are embedded secure elements, universal integrated circuit cards, embedded UICCs (eUICCs), and/or smart SD memory cards.

In one or more embodiments, the execution environments are identified by execution environment handles.

In accordance with a second aspect of the present disclosure, a method of initializing a near field communication, NFC, device is conceived as defined in claim 6.

In one or more embodiments, the execution environments are implemented as secure elements.

In one or more embodiments, the execution environments are identified by execution environment handles.

In accordance with a third aspect of the present disclosure, a computer program is provided, comprising executable instructions that, when executed an application processor, cause said application processor to carry out a method of the kind set forth.

In one or more embodiments, a computer-readable medium comprises a computer program of the kind set forth.

### DESCRIPTION OF DRAWINGS

Embodiments will be described in more detail with reference to the appended drawings, in which:
- Fig. 1: shows an illustrative embodiment of an NFC device;
- Fig. 2: shows another illustrative embodiment of an NFC device;
- Fig. 3: shows an illustrative embodiment of an initialization method;
- Fig. 4: shows another illustrative embodiment of an initialization method; and
- Fig. 5: shows a further illustrative embodiment of an initialization method.

### DESCRIPTION OF EMBODIMENTS

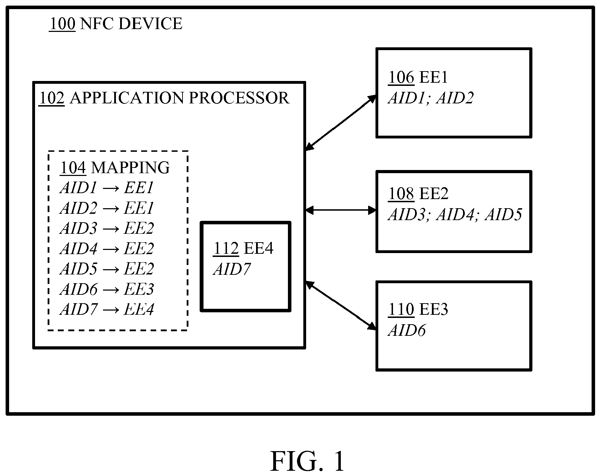

**Fig. 1** shows an illustrative embodiment of an NFC device 100. The NFC device 100 comprises an application processor 102 which is operatively coupled to a plurality of execution environments: a first execution environment 106, a second execution environment 108, and a third execution environment 110. It is noted that a fourth execution environment 112 is included in the application processor 102 (e.g., a computer program executed by the application processor 102). Furthermore, applications may be installed in the execution environments 106, 108, 110, 112; these applications are typically referred to as applets. Each application is identified by an application identifier: AID1, AID2, AID3, AID4, AID5, AID6, and AID7. Also, each application may be registered in the application processor. In accordance with the present disclosure, the application processor 102 is configured to generate a mapping 104 between the application identifiers and the execution environments 106, 108, 110, 112. In this mapping 104, the application identifiers are associated with (i.e., linked to) specific ones of the execution environments 106, 108, 110, 112. For instance, the application identifiers AID1 and AID2, which identify the applications installed in execution environment 106, are also associated with this execution environment 106 in the mapping 104. Thus, the applications (i.e., the AIDs) are registered in the application processor 102 with a specific reference to the execution environment in which they are installed. In this way, the application processor 102 can easily manage the internal communication in the NFC device 100. In particular, the mapping 104 created by the application processor 102 is pushed, e.g. in the form of a routing table, to an NFC controller. For example, the application processor 102 may push the mapping to the NFC controller in an NFC initialization phase. Subsequently, the entries in the routing table may be used by the NFC controller to initiate and support transactions. More specifically, the entries may be used by the NFC controller to initiate and support transactions in a first attempt (e.g., a first tap of an NFC-enabled mobile device on an NFC reader). Thus, seamless transactions are supported, i.e. transactions that do not require multiple attempts.

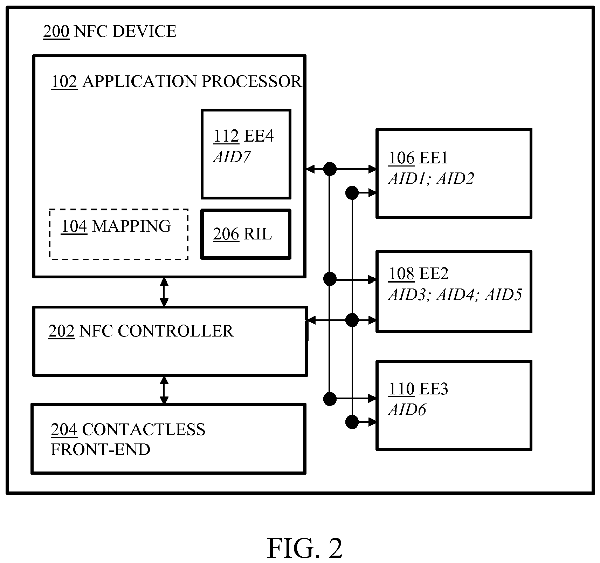

**Fig. 2** shows another illustrative embodiment of an NFC device 200. In addition to the components already shown in Fig. 1, the NFC device 200 comprises an NFC controller 202 operatively coupled to the application processor 102 and to the execution environments 106, 108, 110. Furthermore, the NFC device 200 comprises a contactless front-end 204 operatively coupled to the NFC device 200. The contactless front-end 204 enables near field communication with an external device (not shown), such as an NFC reader in a POS terminal. In operation, the contactless front-end 204 is controlled by the NFC controller 202. The application processor 102 performs general application-related tasks, while the execution environments, in which the applications are installed, execute the actual applications. The application processor 102 may contain a radio interface layer 206. As mentioned above, the application processor 102 may create the mapping 104 and push it in the form of a routing table to the NFC controller 202; this may be done using NFC Controller Interface (NCI) commands. Once an RF discover command is sent by the application processor 102, the NFC controller 202 may become responsible for supporting RF transactions. For example, if a POS terminal requests a transaction using an application identified by AID4, the NFC controller 202 is responsible for routing the transaction data to the second execution environment 108.

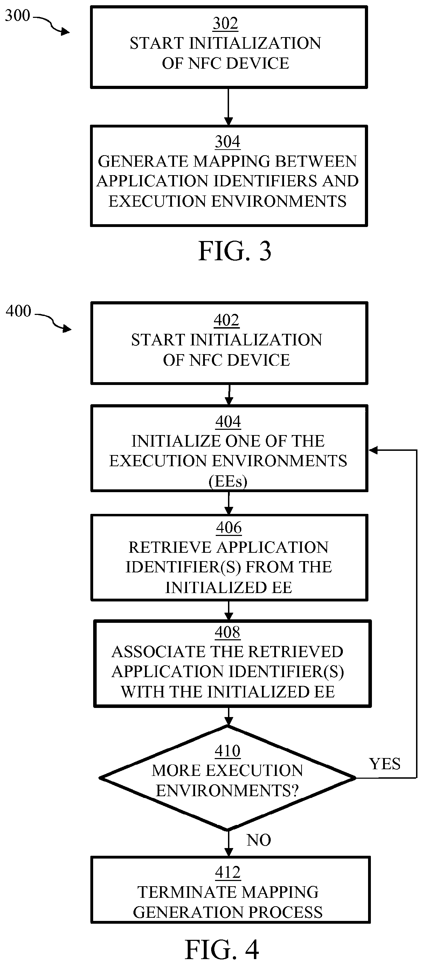

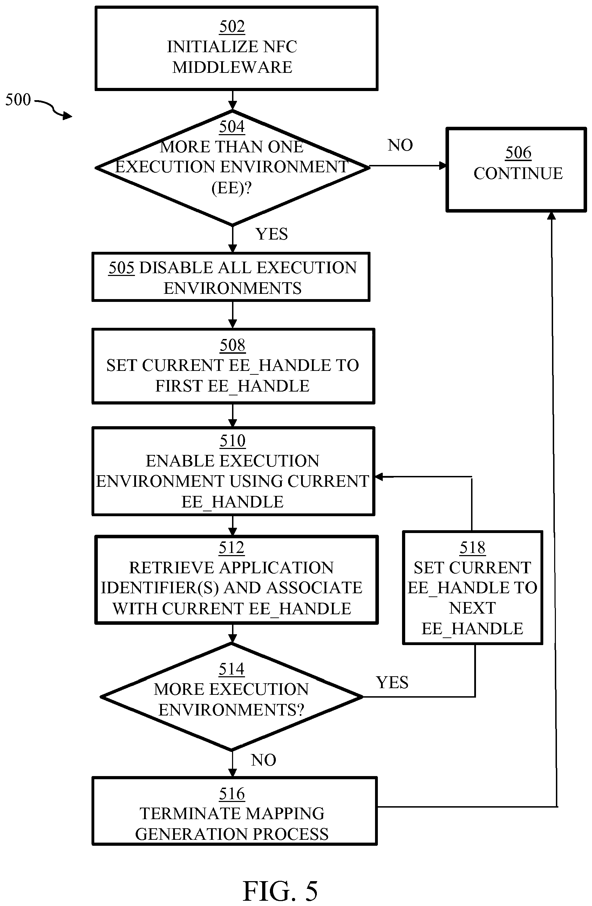

**Fig. 3** shows an illustrative embodiment of an initialization method 300. The method 300 comprises, at 302, starting the initialization of the NFC device 100, 200. Then, at 304, a mapping is generated between application identifiers and execution environments. More specifically, the mapping is generated by the application processor 102 shown in Fig. 1 and Fig. 2. The application processor 102 may create this mapping dynamically and push it to the NFC controller 202. This will enable the NFC controller 202 to identify the execution environment to be used for transactions over the contactless front-end 204. It is noted that the slots in which specific execution environments (e.g., UICCs) are installed can be dynamically changed by the user; for example, the subscriber identity modules (SIM) cards that are present in different slots may be swapped. In that case, applications installed on the application processor 102 are unaware of the execution environments in which their corresponding applets are installed, as the slots can change anytime. Thus, it may be challenging for the application processor 102 to create the mapping 104. The embodiments described with reference to Fig. 4 and Fig. 5 facilitate the generation of said mapping 104.

**Fig. 4** shows another illustrative embodiment of an initialization method 400. More specifically, it shows an example of an efficient way to generate the mapping between the application identifiers and execution environments. The method 400 comprises, at 402, starting the initialization of the NFC device 100, 200. Then, at 404, the application processor 102 initializes one of the execution environments. Subsequently, at 406, the application processor 102 retrieves one or more application identifiers from the initialized execution environment. Then, at 408, the application processor 102 associates the retrieved application identifier or identifiers with the initialized execution environment. In a practical and efficient implementation, the mapping is stored in a table maintained by NFC middleware executed by the application processor 102. At this point of the method 400, the application processor 102 may already store the associations as entries in this table, or it may temporarily store the associations in registers, for example, and create the table at a later stage. At 410, the application processor 102 checks if there are more execution environments, i.e. execution environments that have not yet been involved in the mapping generation process. If this is the case, the method 400 returns to step 404, where another execution environment is initialized. Otherwise, the method 400 proceeds to step 412, where the mapping generation process is terminated. In the last step, the table may be finalized. For instance, if the application processor 102 has stored associations temporarily in registers, the table may be created and filled as this point of the process.

In one or more embodiments, the execution environments are implemented as secure elements. Secure elements provide a protected environment for storing sensitive data and for executing computing tasks on those data. Secure elements are tamper-resistant devices that may implement various security functions. Thus, implementing the execution environments as secure elements increases the level of security that the NFC device 100, 200 can provide. In practical and efficient realizations, the secure elements may be embedded secure elements, universal integrated circuit cards (UICCs), embedded UICCs (eUICCs), and/or smart SD memory cards. It is noted that SD is the trademark for licensed memory cards and devices that meet the SD standards set by the SD Association. The SD Association was formed to develop and promote a secure, digital memory format. Examples of SD memory cards are microSD cards and advanced security SD (ASSD) cards. Smart SD memory cards have a single wire protocol (SWP) interface. An embedded SE (eSE) is not a separate device but a secure element that is integrated with another device (usually the NFC controller). An embedded UICC (eUICC) is a secure element designed to remotely manage multiple mobile network operator subscriptions and to be compliant with GSMA specifications

Furthermore, in one or more embodiments, the execution environments are identified by execution environment handles. The use of execution environment handles facilitates the routing of commands and data to the execution environments. It is noted that an execution environment handle is an identifier of an execution environment in accordance with the NCI specification propagated by the NFC Forum. The NFC Forum is a non-profit industry association that promotes the use of NFC short-range wireless interaction in consumer electronics, mobile devices and personal computers. It is noted, furthermore, that the present disclosure is not limited to this specific type of identifiers. In other words, the execution environments may also be identified by other types of identifiers. Furthermore, in a practical and efficient implementation, the application processor 102 is configured to generate the mapping in an NFC initialization phase of the NFC device 100, 200. In this phase, the NFC middleware run by the application processor 102 is also initialized.

**Fig. 5** shows a further illustrative embodiment of an initialization method 500. More specifically, it shows another example of an efficient way to generate the mapping between the application identifiers and execution environments. The method comprises, at 502, initializing the NFC middleware. Then, at 504, the application processor 102 checks if there is more than one execution environment. If not, then the application processor 102 may continue, at 506, with normal operation, because there is no need for generating a mapping. If there is more than one execution environment, the method 500 proceeds to step 505, wherein all execution environments are disabled. Next, at 508, the application processor 102 sets the current execution environment handle to the first execution environment handle (i.e., to the handle that identifies the first execution environment). Next, at 510, the application processor 102 enables the execution environment identified by the current execution environment handle. Enabling an execution environment activates the corresponding single wire protocol (SWP) line between the NFC controller 202 and said execution environment. It is noted that execution environments may be enabled and disabled by sending NCI commands to the NFC controller 202 using the execution environment handles. Then, at 512, the application processor 102 retrieves one or more application identifiers from this execution environment, and associates these application identifiers with the current execution environment handle. This can be implemented in various ways. For example, the application processor 102 may query for the application identifiers listed for the current execution environment handle over the SWP interface between the NFC controller 202 and the execution environment; this query operation may use a registry service applet installed in the execution environment. For example, the registry service applet may be the contactless registry service (CRS) applet as specified by GlobalPlatform®. GlobalPlatform® is a non-profit, member driven association which defines and develops specifications to facilitate the secure deployment and management of multiple applications on secure chip technology. In another implementation, the application processor 102 may check the status of the different SWP lines over a radio interface layer (RIL) and then retrieve the application identifiers from the active execution environment, i.e. the execution environment whose SWP line is active. Subsequently, the application identifiers from this execution environment are retrieved directly by the application processor 102 over the RIL using the registry service applet. A radio interface layer is a layer which provides an interface to the execution environments. As shown in Fig. 2, the application processor may contain the radio interface layer 206. Next, at 514, the application processor 102 checks if there are more execution environments, i.e. execution environments that have not yet been involved in the mapping generation process. If this is the case, the method 500 proceeds to step 518, where the application processor 102 sets the current execution environment handle to the next execution environment handle (i.e., the handle identifying the next execution environment to be involved in the process), and then returns to step 510. Otherwise, the method 500 proceeds to step 516, where the mapping generation process is terminated, and then to step 506, where the application processor 102 may continue with normal operation.

The systems and methods described herein may be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "mobile device" refers to any type of portable electronic device, including a cellular telephone, a Personal Digital Assistant (PDA), smartphone, tablet etc. Furthermore, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "storage unit" or "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: NFC device
- 102: application processor
- 104: mapping
- 106: first execution environment
- 108: second execution environment
- 110: third execution environment
- 112: fourth execution environment
- 200: NFC device
- 202: NFC controller
- 204: contactless front-end
- 206: radio interface layer (RIL)
- 300: initialization method
- 302: start initialization of NFC device
- 304: generate mapping between application identifiers and execution environments
- 400: initialization method
- 402: start initialization of nfc device
- 404: initialize one of the execution environments (EEs)
- 406: retrieve application identifier(s) from the initialized execution environment
- 408: associate the retrieved application identifier(s) with the initialized execution environment
- 410: more execution environments?
- 412: terminate mapping generation process
- 500: initialization method
- 502: initialize NFC middleware
- 504: more than one execution environment (EE)?
- 505: disable all execution environments
- 506: continue
- 508: set current execution environment handle to first execution environment handle
- 510: enable execution environment using current execution environment handle
- 512: retrieve application identifier(s) and associate with current execution environment handle
- 514: more execution environments?
- 516: terminate mapping generation process
- 518: set current EE_handle to next EE_handle

## Claims

1. A near field communication, NFC, device (100, 200), comprising an application processor (102) and a plurality of execution environments (106, 108, 110, 112), wherein the application processor (102) is configured to generate a mapping (104) between application identifiers and said execution environments (106, 108, 110, 112), and wherein, in said mapping (104), the application identifiers are associated with specific ones of said execution environments (106, 108, 110, 112), wherein the application processor (102) is configured to generate said mapping (104) by:
(a) initializing one of the execution environments (106, 108, 110, 112);
(b) retrieving one or more application identifiers from the initialized execution environment;
(c) associating the retrieved application identifiers with the initialized execution environment;
(d) repeating steps (a) to (c) for the other execution environment or environments;
**characterized in that** the application processor (102) is further configured to generate said mapping (104) in an NFC initialization phase of the NFC device (100, 200) and to push the mapping to an NFC controller (202) of the NFC device (100, 200) during said NFC initialization phase of the NFC device (100, 200), wherein the NFC controller (202) is configured to initiate and support transactions between the NFC device and an external device requesting said transactions and to identify the execution environment to be used for said transactions by means of said mapping.

2. The NFC device (100, 200) of claim 1, wherein the execution environments (106, 108, 110, 112) are implemented as secure elements.

3. The NFC device (100, 200) of claim 2, wherein the secure elements are embedded secure elements, universal integrated circuit cards, embedded UICCs, eUICCs, and/or smart Secure Digital, SD, memory cards.

4. The NFC device (100, 200) of any preceding claim, wherein the execution environments (106, 108, 110, 112) are identified by execution environment handles.

5. The NFC device (100, 200) of any preceding claim, wherein the mapping (104) is stored in a table maintained by NFC middleware executed by the application processor (102).

6. A method of initializing a near field communication, NFC, device (100, 200), wherein the NFC device (100, 200) comprises an application processor (102) and a plurality of execution environments (106, 108, 110, 112), the method comprising that the application processor (102) generates a mapping (104) between application identifiers and said execution environments (106, 108, 110, 112), wherein, in said mapping (104), the application identifiers are associated with specific ones of said execution environments (106, 108, 110, 112), wherein the application processor (102) generates said mapping (104) by:
(a) initializing one of the execution environments (106, 108, 110, 112);
(b) retrieving one or more application identifiers from the initialized execution environment;
(c) associating the retrieved application identifiers with the initialized execution environment;
(d) repeating steps (a) to (c) for the other execution environment or environments;
**characterized in that** the application processor (102) generates said mapping (104) in an NFC initialization phase of the NFC device (100, 200) and pushes the mapping to an NFC controller (202) of the NFC device (100, 200) during said NFC initialization phase of the NFC device (100, 200), wherein the NFC controller (202) initiates and supports transactions between the NFC device and an external device requesting said transactions and identifies the execution environment to be used for said transactions by means of said mapping.

7. The method of claim 6, wherein the execution environments (106, 108, 110, 112) are implemented as secure elements.

8. The method of claim 6 or 7, wherein the execution environments (106, 108, 110, 112) are identified by execution environment handles.

9. A computer program comprising executable instructions that, when executed by an application processor (102), cause said application processor (102) to carry out the method of any one of claims 6 to 8.

10. A non-transitory computer-readable medium comprising the computer program of claim 9.

## Patentansprüche

1. Nahfeldkommunikations, NFC (Near Field Communication), -Vorrichtung (100, 200), die einen Anwendungsprozessor (102) und mehrere Ausführungsumgebungen (106, 108, 110, 112) umfasst, wobei der Anwendungsprozessor (102) dafür ausgelegt ist, eine Zuordnung (104) zwischen Anwendungskennungen und den Ausführungsumgebungen (106, 108, 110, 112) zu erzeugen, und wobei, in der Zuordnung (104), die Anwendungskennungen spezifischen der Ausführungsumgebungen (106, 108, 110, 112) zugeordnet werden, wobei der Anwendungsprozessor (102) dafür ausgelegt ist, die Zuordnung (104) zu erzeugen durch:
(a) Initialisieren einer der Ausführungsumgebungen (106, 108, 110, 112);
(b) Abrufen einer oder mehrerer Anwendungskennungen aus der initialisierten Ausführungsumgebung;
(c) Zuordnen der abgerufenen Anwendungskennungen zur initialisierten Ausführungsumgebung;
(d) Wiederholen der Schritte (a) bis (c) für die andere(n) Ausführungsumgebung(en);
**dadurch gekennzeichnet, dass** der Anwendungsprozessor (102) ferner dafür ausgelegt ist, die Zuordnung (104) in einer NFC-Initialisierungsphase der NFC-Vorrichtung (100, 200) zu erzeugen und die Zuordnung während der NFC-Initialisierungsphase der NFC-Vorrichtung (100, 200) an eine NFC-Steuerung (202) der NFC-Vorrichtung (100, 200) zu senden, wobei die NFC-Steuerung (202) dafür ausgelegt ist, Transaktionen zwischen der NFC-Vorrichtung und einer externen Vorrichtung, die die Transaktionen anfordert, zu initiieren und zu unterstützen und die für die Transaktionen zu verwendende Ausführungsumgebung anhand der Zuordnung zu identifizieren.

2. NFC-Vorrichtung (100, 200) nach Anspruch 1, wobei die Ausführungsumgebungen (106, 108, 110, 112) als sichere Elemente implementiert sind.

3. NFC-Vorrichtung (100, 200) nach Anspruch 2, wobei die sicheren Elemente eingebettete sichere Elemente, universelle integrierte Schaltungskarten (UICC, "Universal Integrated Circuit Card"), eingebettete UICCs, eUICCs, und/oder intelligente sichere digitale, SD- ("Secure Digital"), Speicherkarten sind.

4. NFC-Vorrichtung (100, 200) nach einem der vorstehenden Ansprüche, wobei die Ausführungsumgebungen (106, 108, 110, 112) durch Ausführungsumgebungs-Anfasser ("Handles") identifiziert sind.

5. NFC-Vorrichtung (100, 200) nach einem der vorstehenden Ansprüche, wobei die Zuordnung (104) in einer Tabelle gespeichert ist, die von einer NFC-Middleware verwaltet wird, welche vom Anwendungsprozessor (102) ausgeführt wird.

6. Verfahren zum Initialisieren einer Nahfeldkommunikations, NFC, -Vorrichtung (100, 200), wobei die NFC-Vorrichtung (100, 200) einen Anwendungsprozessor (102) und mehrere Ausführungsumgebungen (106, 108, 110, 112) umfasst, wobei das Verfahren umfasst, dass der Anwendungsprozessor (102) eine Zuordnung (104) zwischen Anwendungskennungen und den Ausführungsumgebungen (106, 108, 110, 112) erzeugt, wobei, in der Zuordnung (104), die Anwendungskennungen spezifischen der Ausführungsumgebungen (106, 108, 110, 112) zugeordnet werden, wobei der Anwendungsprozessor (102) die Zuordnung (104) erzeugt durch:
(a) Initialisieren einer der Ausführungsumgebungen (106, 108, 110, 112);
(b) Abrufen einer oder mehrerer Anwendungskennungen aus der initialisierten Ausführungsumgebung;
(c) Zuordnen der abgerufenen Anwendungskennungen zur initialisierten Ausführungsumgebung;
(d) Wiederholen der Schritte (a) bis (c) für die andere(n) Ausführungsumgebung(en);
**dadurch gekennzeichnet, dass** der Anwendungsprozessor (102) die Zuordnung (104) in einer NFC-Initialisierungsphase der NFC-Vorrichtung (100, 200) erzeugt und die Zuordnung während der NFC-Initialisierungsphase der NFC-Vorrichtung (100, 200) an eine NFC-Steuerung (202) der NFC-Vorrichtung (100, 200) sendet, wobei die NFC-Steuerung (202) Transaktionen zwischen der NFC-Vorrichtung und einer externen Vorrichtung, die die Transaktionen anfordert, initiiert und unterstützt und die für die Transaktionen zu verwendende Ausführungsumgebung anhand der Zuordnung identifiziert.

7. Verfahren nach Anspruch 6, wobei die Ausführungsumgebungen (106, 108, 110, 112) als sichere Elemente implementiert sind.

8. Verfahren nach Anspruch 6 oder 7, wobei die Ausführungsumgebungen (106, 108, 110, 112) durch Ausführungsumgebungs-Anfasser ("Handles") identifiziert sind.

9. Computerprogramm, das ausführbare Anweisungen umfasst, die bei Ausführung durch einen Anwendungsprozessor (102) bewirken, dass der Anwendungsprozessor (102) das Verfahren nach einem der Ansprüche 6 bis 8 ausführt.

10. Nicht-transitorisches, computerlesbares Medium, das das Computerprogramm nach Anspruch 9 umfasst.

## Revendications

1. Dispositif de communication en champ proche, NFC, (100, 200), comprenant un processeur d'application (102) et une pluralité d'environnements d'exécution (106, 108, 110, 112), dans lequel le processeur d'application (102) est configuré pour générer une concordance (104) entre des identifiants d'applications et lesdits environnements d'exécution (106, 108, 110, 112), et dans lequel, dans ladite concordance (104), les identifiants d'application sont associés à des environnements spécifiques desdits environnements d'exécution (106, 108, 110, 112), le processeur d'application (102) étant configuré pour générer ladite concordance (104) en :
(a) initialisant un des environnements d'exécution (106, 108, 110, 112) ;
(b) recouvrant un ou plusieurs identifiants d'application auprès de l'environnement d'exécution initialisé ;
(c) associant les identifiants d'applications recouvrés à l'environnement d'exécution initialisé ;
(d) répétant les étapes (a) à (c) pour l'autre ou les autres environnements d'exécution ;
**caractérisé en ce que** le processeur d'application (102) est configuré en outre pour générer ladite concordance (104) dans une phase d'initialisation NFC du dispositif NFC (100, 200) et pousser la concordance vers un contrôleur NFC (202) du dispositif NFC (100, 200) durant ladite phase d'initialisation NFC du dispositif NFC (100, 200), le contrôleur NFC (202) étant configuré pour lancer et prendre en charge les transactions entre le dispositif NFC et un dispositif externe demandant lesdites transactions et identifier l'environnement d'exécution à utiliser pour lesdites transactions au moyen de ladite concordance.

2. Dispositif NFC (100, 200) selon la revendication 1, dans lequel les environnements d'exécution (106, 108, 110, 112) sont mis en œuvre en tant qu'élément sécurisé.

3. Dispositif NFC (100, 200) selon la revendication 2, dans lequel les éléments sécurisés sont des éléments sécurisés intégrés, des cartes de circuits intégrés universelles, des UICC intégrés, eUICC, et/ou des cartes de mémoire numérique sécurisées, SD, intelligentes.

4. Dispositif NFC (100, 200) selon n'importe quelle revendication précédente, dans lequel les environnements d'exécution (106, 108, 110, 112) sont identifiés par des descripteurs d'environnement d'exécution.

5. Dispositif NFC (100, 200) selon n'importe quelle revendication précédente, dans lequel la concordance (104) est mémorisée dans une table tenue à jour par un logiciel médiateur NFC exécuté par le processeur d'application (102) .

6. Procédé d'initialisation d'un dispositif de communication en champ proche, NFC, (100, 200), le dispositif NFC (100, 200) comprenant un processeur d'application (102) et une pluralité d'environnements d'exécution (106, 108, 110, 112), le procédé comprenant la génération par le processeur d'application (102) d'une concordance (104) entre des identifiants d'applications et lesdits environnements d'exécution (106, 108, 110, 112), dans lequel, dans ladite concordance (104), les identifiants d'application sont associés à des environnements spécifiques desdits environnements d'exécution (106, 108, 110, 112), le processeur d'application (102) générant ladite concordance (104) en :
(a) initialisant un des environnements d'exécution (106, 108, 110, 112) ;
(b) recouvrant un ou plusieurs identifiants d'application auprès de l'environnement d'exécution initialisé ;
(c) associant les identifiants d'applications recouvrés à l'environnement d'exécution initialisé ;
(d) répétant les étapes (a) à (c) pour l'autre ou les autres environnements d'exécution ;
**caractérisé en ce que** le processeur d'application (102) génère ladite concordance (104) dans une phase d'initialisation NFC du dispositif NFC (100, 200) et pousse la concordance vers un contrôleur NFC (202) du dispositif NFC (100, 200) durant ladite phase d'initialisation NFC du dispositif NFC (100, 200), le contrôleur NFC (202) étant configuré pour lancer et prendre en charge les transactions entre le dispositif NFC et un dispositif externe demandant lesdites transactions et identifiant l'environnement d'exécution à utiliser pour lesdites transactions au moyen de ladite concordance.

7. Procédé selon la revendication 6, dans lequel les environnements d'exécution (106, 108, 110, 112) sont mis en œuvre en tant qu'éléments sécurisés.

8. Procédé selon la revendication 6 ou 7, dans lequel les environnements d'exécution (106, 108, 110, 112) sont identifiés par des descripteurs d'environnement d'exécution.

9. Programme informatique comprenant des instructions exécutables qui, à leur exécution par un processeur d'application (102), amènent ledit processeur d'application (102) à réaliser le procédé selon l'une quelconque des revendications 6 à 8.

10. Support non transitoire lisible par ordinateur comprenant le programme informatique selon la revendication 9.
